# EUROPÄISCHE PATENTSCHRIFT

(11) **EP 4 313 679 B1**
(45) Veröffentlichungstag und Bekanntmachung des Hinweises auf die Patenterteilung: **23.07.2025**
(21) Anmeldenummer: 21838981.5
(22) Anmeldetag: 17.12.2021
(51) Int. Cl.: B60P 3/36, B60H 1/00

(54) **SCHRANKSYSTEM FÜR EIN FAHRZEUG**
CABINET SYSTEM FOR A VEHICLE
SYSTÈME D'ARMOIRE POUR UN VÉHICULE

(30) Priorität: 26.03.2021 DE 102021001595
(43) Veröffentlichungstag der Anmeldung: 07.02.2024
(73) Patentinhaber: Truma Gerätetechnik GmbH & Co. KG, 85640 Putzbrunn (DE)
(72) Erfinder: VENSCHOTT, Mathias, 85640 Putzbrunn (DE)
(74) Vertreter: Prinz & Partner mbB
(86) Internationale Anmeldenummer: PCT/EP2021/000157
(87) Internationale Veröffentlichungsnummer: WO 2022/199781

(56) Entgegenhaltungen:
- EP-B1- 3 121 042
- DE-U1- 202009 009 446
- US-A- 3 962 885
- US-A1- 2008 314 072

## Beschreibung

Die Erfindung bezieht sich auf ein Schranksystem zum Einbau in einem Fahrzeug. Das Fahrzeug ist beispielweise ein Wohnwagen oder ein Wohnmobil.

Wohnwagen oder Wohnmobile (beide auch zusammengefasst als Caravan bezeichnet) oder allgemein alle Arten von Fahrzeugen, welche einen beweglichen Wohnraum aufweisen, verfügen in der Regel über Temperierungsvorrichtungen wie Heizungen oder Klimaanlagen. Eine Klimaanlage mit mehreren Ausgestaltungen offenbart beispielsweise die DE 20 2009 009 446 U1. Gelegentlich wird auf Klimaanlagen verzichtet und nur ein Dachfenster zur Lüftung verwendet.

Ab einer gewissen Größe des Caravans hat es sich weitgehend etabliert, einen Kühlschrank vorzusehen. Eine Herausforderung solcher Kühlschränke besteht darin, dass der Kühlschrank nicht zu hoch gesetzt wird, um die Erreichbarkeit bzw. Greifbarkeit für den Anwender nicht zu erschweren. Deshalb verbleibt oberhalb des Kühlschranks zumeist ein Staufach für Utensilien.

Oft stellt sich erst nachträglich während der Benutzung eines Caravans der Wunsch nach einer Klimaanlage ein. Da erweist es sich jedoch als nachteilig, dass Klimaanlagen oder Klimageräte aufwändig in der Montage sind. So muss das Gerät, welches den Kühlkreislauf zur Verfügung stellt, mechanisch befestigt und elektrisch angeschlossen werden. Zudem müssen Rohre und Luftverteiler verlegt werden, über welche die Raumluft für die Kühlung und die Außenluft für das Abführen der Außenluft geführt werden. Die einzelnen Komponenten gehen auch mit einem in der Regel hohen Platzbedarf einher. Der Vorgang der Montage erhöht auch die Kosten, da sie vorzugsweise durch Fachpersonal durchzuführen ist. So steigert sich insgesamt die Hemmnis, nachträglich eine Klimaanlage zu erwerben.

Eine Grundform für ein Schranksystem offenbart die EP 3 121 042 B1, wobei jedoch nur die Luftführung des Klimageräts thematisiert wird.

Aus der US 3 962 885 A ist ein Klimatisierungssystem für ein Wohnmobil bekannt, das so ausgelegt ist, dass es den Innenraum des Wohnmobils durch ihr eigenes eingebautes Luftverteilungssystem Luft zuführt.

Die DE 20 2009 009 446 U1 offenbart ein Klimagerät zur Luftaufbereitung für einen Innenraum eines Freizeitfahrzeugs.

Die Aufgabe der Erfindung besteht darin, die Nachteile im Stand der Technik in Bezug auf die Montage von Klimageräten zu reduzieren.

Die Erfindung löst die Aufgabe durch ein Schranksystem zum Einbau in einem Fahrzeug, mit einem unteren Aufnahmeraum, einem oberen Aufnahmeraum und mindestens einer elektrische Kontaktierungsvorrichtung zum Bereitstellen von elektrischer Energie und/oder zur Datenkommunikation, wobei der obere Aufnahmeraum derartig ausgestaltet ist, dass ein Klimagerät reversibel in den oberen Aufnahmeraum einbringbar ist, und wobei der obere Aufnahmeraum derartig ausgestaltet ist, dass das Klimagerät durch ein vollendetes Einbringen in den oberen Aufnahmeraum mechanisch reversibel in dem oberen Aufnahmeraum fixiert ist und reversibel mit der elektrischen Kontaktierungsvorrichtung kontaktiert ist. Darüber hinaus ist eine Kondensatabführvorrichtung vorhanden. und die Kondensatabführvorrichtung ist mit dem oberen Aufnahmeraum verbunden.

Die Erfindung beschreibt somit ein Schranksystem, in welches ein Klimagerät reversibel eingebracht werden kann. Dabei ist es möglich, dass bereits durch das Einbringen des Klimageräts eine Fixierung, also eine mechanische Befestigung, und eine elektrische Kontaktierung bewerkstelligt wird. Dadurch vereinfacht sich die Montage des Klimageräts. Überdies wird für das Klimagerät ein oberer Aufnahmeraum benutzt, der im Stand der Technik üblicherweise nur als Stauraum Verwendung findet. Daher wird auch der im Caravan in der Regel beschränkte Raum optimal ausgenutzt. Der große Vorteil besteht darin, dass das Schranksystem quasi ein Rack-System realisiert und dass beispielsweise der Benutzer selbst das Klimagerät ein- und ausschieben kann. Somit entfällt die aufwändige Montage und es fällt dem Nutzer leichter, sich für eine Klimaanlage zu entscheiden. Die mechanische Fixierung erfolgt z. B. über ein Einrastsystem zwischen Klimagerät und Schranksystem. Die elektrische Kontaktierung befindet sich dabei beispielsweise in dem oberen Aufnahmeraum oder in einer Zwischenlage (z. B. in Form eines Bretts) zwischen dem oberen und dem unteren Aufnahmeraum. Während des Betriebs des Klimageräts fällt in der Regel durch die Luftfeuchtigkeit Kondensat an, welches hier durch das Schranksystem zu einer Kondensatabführvorrichtung geführt wird. Die Kondensatabführvorrichtung erlaubt dabei vorzugweise das Entfernen des Kondensats, indem beispielsweise ein Ventil zum Ablassen geöffnet wird. Das Kondensat sammelt sich dabei zunächst unterhalb des Verdampfers des Klimageräts. Dann wird das Kondensat durch die Kondensatabführvorrichtung, z. B. durch einen Schlauch oder einen Kanal, zu dem unteren Aufnahmeraum geführt und von dort zum Boden des Schranksystems bzw. des Fahrzeugs. Alternativ oder ergänzend wird das Kondensat durch Luftöffnungen (vorzugsweise die, welche auf den Außenluft-Verflüssiger münden) durch eine Seiten- oder Rückwand des Schranksystems abgeführt. Weiterhin kann das Kondensat im Klimagerät vom Verdampfer zum Verflüssiger geführt und dann über die Luftführung des Verflüssigers abgeführt werden.

Eine Ausgestaltung des Schranksystems sieht vor, dass zumindest der obere Aufnahmeraum mindestens eine Luftführungsvorrichtung zum Führen von Luft aufweist, und dass der obere Aufnahmeraum derartig ausgestaltet ist, dass das Klimagerät durch ein vollendetes Einbringen in den oberen Aufnahmeraum reversibel mit der Luftführungsvorrichtung kontaktiert ist. Die in der Luftführungsvorrichtung geführte Luft ist vorzugsweise Außenluft. In dieser Ausgestaltung findet eine Kontaktierung zwischen dem Klimagerät und einer Struktur zur Führung von Luft bereits durch das Einbringen des Klimageräts in den oberen Aufnahmeraum statt. Dies vereinfacht somit zusätzlich die Montage. In einer Ausgestaltung handelt es sich bei der von der Luftführungsvorrichtung geführten Luft um Außenluft, welche insbesondere durch den Boden des Fahrzeugs angesaugt und über das Dach des Fahrzeugs ausgeblasen. In einer Ausgestaltung hat das Klimagerät eine Luftführung nach unten, sodass über die entsprechende Luftführungsvorrichtung eine Verbindung zum unteren Aufnahmeraum besteht. Von dem unteren Aufnahmeraum besteht dann eine weitere Luftführungsverbindung zum Außenraum außerhalb des zu kühlenden Raumes, d.h. außerhalb des Fahrzeugs.

Eine Ausgestaltung des Schranksystems beinhaltet, dass die Luftführungsvorrichtung zumindest teilweise aus einer Öffnung in einer Rückenwand des Schranksystems besteht. In dieser Ausgestaltung verfügt das Schranksystem über mindestes eine Seitenwand oder zwei Seitenwände und eine Rückenwand. In der Rückenwand befindet sich eine Öffnung für die Luftführungsvorrichtung.

In einer alternativen Ausgestaltung ist vorgesehen, dass die Luftführungsvorrichtung zumindest teilweise aus einer Öffnung in einer als Rückenwand des Schranksystems dienenden Wand des Fahrzeugs besteht. In dieser Ausgestaltung befindet sich somit eine Seitenwand oder befinden sich zwei Seitenwände an einer Innenwand des Fahrzeugs, die damit eine Rückenwand des Schranksystems bildet. In dieser Fahrzeugwand befindet sich dabei eine Öffnung für die Luftführungsvorrichtung.

Gemäß einer Ausgestaltung ist vorgesehen, dass die Luftführungsvorrichtung eine Verbindung in einem Bereich der Bodenfläche und/oder in einem Bereich einer oberen Abschlussfläche des Schranksystems aufweist. So sieht es eine Ausgestaltung vor, dass Außenluft am Boden des unteren Aufnahmeraums eingesagt und über das Dach des Fahrzeugs und daher auch im Bereich der oberen Abschlussfläche des Schranksystems ausgeblasen wird.

In einer alternativen und/oder ergänzenden Ausgestaltung besteht die Verbindung der Luftführungsvorrichtung mit Teilen des Fahrzeugs, die den Boden und/oder die obere Abschlussfläche des Schranksystems bilden. So ist vorgesehen, dass die Luftführungsvorrichtung eine Verbindung in einem einen Bereich der Bodenfläche des Schranksystems bildenden Teils des Fahrzeugs und/oder in einem einen Bereich einer oberen Abschlussfläche des Schranksystems bildenden Teils des Fahrzeugs aufweist.

Eine Ausgestaltung des Schranksystems sieht vor, dass die Luftführungsvorrichtung mit dem oberen Aufnahmeraum und mit dem unteren Aufnahmeraum kontaktiert ist. In dieser Ausgestaltung können somit das Klimagerät in dem oberen Aufnahmeraum und ein Gerät im unteren Aufnahmeraum die gleiche Struktur zum Führen von Luft, z. B. von Außenluft oder zum Ausbringen von Wärme in den Außenbereich verwenden. Dies ist beispielsweise vorteilhaft, wenn sich in dem unteren Aufnahmeraum ein Kühlschrank befindet.

Eine Ausgestaltung des Schranksystems beinhaltet, dass Abmessungen des unteren Aufnahmeraums einer von mehreren vorgegeben Gruppen von Abmessungswerten entsprechen. Alternativ oder ergänzend sieht eine Ausgestaltung vor, dass Abmessungen des oberen Aufnahmeraums einer von mehreren vorgegeben Gruppen von Abmessungswerten entsprechen. In den beiden vorgenannten Ausgestaltungen gibt es somit quasi mehrere fest vorgegebene Grundgrößen für die Aufnahmeräume.

Eine Ausgestaltung des Schranksystems beinhaltet, dass eine elektrische Verbindung zwischen einer in den unteren Aufnahmeraum mündenden Stromversorgung und der elektrischen Kontaktierungsvorrichtung besteht. In dieser Ausgestaltung verfügt der untere Aufnahmeraum über eine Stromversorgung, welche in den oberen Aufnahmeraum zu der elektrischen Kontaktierungsvorrichtung geführt ist. Daher ist im Caravan bei dem dort verbauten Schranksystem nur die Verbindung - und damit einhergehende Verkabelung - mit dem unteren Aufnahmeraum erforderlich.

Eine Ausgestaltung des Schranksystems sieht vor, dass der untere Aufnahmeraum für die Aufnahme eines Kühlschranks ausgestaltet ist. Die Dimensionierung und Stabilität des unteren Aufnahmeraums sind in dieser Ausgestaltung für einen Kühlschrank ausgelegt.

Eine Ausgestaltung des Schranksystems beinhaltet, dass die elektrische Kontaktierungsvorrichtung mit einer elektrischen Schnittstelle des Klimageräts durch eine Schieb- oder Steckverbindung elektrisch kontaktierbar ist.

Das Klimagerät für das Schranksystem weist vorzugsweise mindestens eine Luftansaugöffnung und mindestens eine Luftausblasöffnung auf, wobei das Klimagerät dafür ausgestaltet ist, in einem Fahrzeug angewendet zu werden, und wobei die Luftansaugöffnung und die Luftausblasöffnung in einem vorderen Bereich des Klimageräts angeordnet sind. Die beiden Luftöffnungen (Luftansaug- und Luftausblasöffnung) beziehen sich hier auf die Zu- und Abführung der Raumluft. Durch die Platzierung im vorderen Bereich sind somit auch keine weiteren Änderungen vorzunehmen, sodass z. B. auch der im Stand der Technik übliche Luftverteiler nicht erforderlich. So kann beispielsweise das Klimagerät über das Schranksystem hinausragen, sodass der vordere Bereich damit der überragende Abschnitt ist. Die Luftöffnungen wären dabei vorzugweise seitlich angeordnet. In einer alternativen Ausgestaltung schließt das Klimagerät bündig mit dem Schranksystem. In diesem Fall verfügt das Klimagerät über eine Vorderseite, auf welcher sich die Luftöffnungen befinden.

Gemäß einer Ausgestaltung ist vorgesehen, dass das Klimagerät eine Bedienvorrichtung aufweist, und dass die Bedienvorrichtung in dem vorderen Bereich angeordnet ist. Die Bedienvorrichtung ist somit ebenfalls entweder seitlich an einem herausragenden Abschnitt oder auf der Vorderseite angeordnet.

Eine Ausgestaltung sieht vor, dass das Klimagerät eine elektrische Schnittstelle zum Empfangen von elektrischer Energie und/oder zur Kommunikation von Daten aufweist. Diese Schnittstelle ist vorzugweise so ausgestaltet, dass sie mit der elektrischen Kontaktierungsvorrichtung des Schranksystems verbindbar ist und zwar durch das Einbringen des Klimageräts in den oberen Aufnahmeraum. Dies sieht die nächste Ausgestaltung vor.

Gemäß einer Ausgestaltung ist vorgesehen, dass die elektrische Schnittstelle durch eine Schieb- oder Steckverbindung mit einer zugehörigen elektrischen Kontaktierungsvorrichtung elektrisch kontaktierbar ist.

Eine Ausgestaltung sieht vor, dass das Klimagerät derartig dimensioniert ist und ein derartiges Gewicht aufweist, dass das Klimagerät von einer Person für die Einbringung in einen Fixierungsort handhabbar ist. Das Klimagerät hat in dieser Ausgestaltungen Abmessungen und ist so schwer, dass sie von einer Person gehoben und auch in ein Schranksystem, vorzugweise in den oberen Aufnahmeraum des erfindungsgemäßen Schranksystems eingebracht werden kann. Dies vereinfacht die Montage.

Im Einzelnen gibt es eine Vielzahl von Möglichkeiten, das erfindungsgemäße Schranksystem auszugestalten und weiterzubilden. Dazu wird verwiesen einerseits auf die dem unabhängigen Patentanspruch nachgeordneten Patentansprüche, andererseits auf die folgende Beschreibung von Ausführungsbeispielen in Verbindung mit der Zeichnung. Es zeigt die:
Fig. 1: eine schematische Darstellung eines Fahrzeugs mit einem Schranksystem,
Fig. 2: eine Draufsicht auf ein schematisches Schranksystem und
Fig. 3: eine Darstellung einer schematischen Frontseite eines Klimageräts.

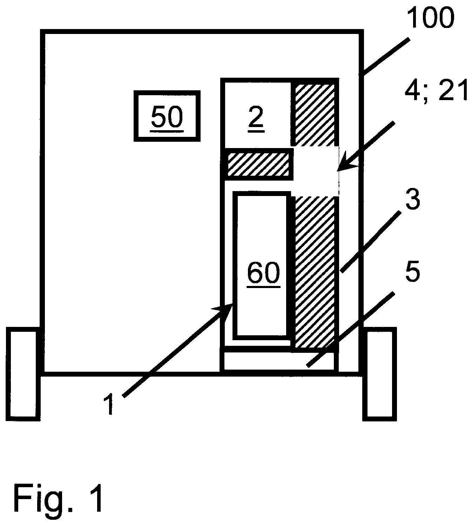

Die Fig. 1 zeigt schematisch ein Fahrzeug 100, bei dem es sich hier um einen Wohnwagen handelt. Das Fahrzeug ist alternativ ein Wohnmobil oder allgemeine eine Art von Caravan.

In dem Fahrzeug 100 ist ein erfindungsgemäßes Schranksystem installiert. Das Schranksystem hat dabei mindestens einen unteren Aufnahmeraum 1 und einen oberen Aufnahmeraum 2. In dem unteren Aufnahmeraum 1 befindet sich ein Kühlschrank 60 und in den oberen Aufnahmeraum 2 wird ein Klimagerät 50 eingebracht. Dabei erfolgt die Fixierung und Kontaktierung des Klimageräts 50 durch das Einbringen in den oberen Aufnahmeraum 2, sodass weitere Schritte, z. B. ein Anbringen von Schrauben oder das Verlegen von Kabeln oder Rohrleitungen nicht erforderlich sind. Die Kontaktierung erfolgt also einfach über das Einschieben in den oberen Aufnahmeraum 2. Die damit erzeugten Verbindungen sind dabei reversibel, sodass sich das Klimagerät 50 auch einfach wieder durch ein Herausziehen ausbauen lässt. Zwischen den beiden Aufnahmeräumen bzw. damit zwischen dem Klimagerät 2 und dem Kühlschrank 60 ist hier eine Trennlage angedeutet. Auf diese Trennlage können somit auch in dem Fall, dass kein Klimagerät 50 vorhanden ist, andere Gegenstände abgelegt werden. Damit kann der obere Aufnahmeraum 2 auch als Stauraum dienen.

Für die Führung der Außenluft, auf die das Klimagerät 50 bei der Kühlung der Raumluft in dem Fahrzeug 100 die thermische Energie überträgt, befindet sich in der Rückwand 3 des Schranksystems eine Öffnung 4. Mit dieser Öffnung 4 ist dabei auch der Kühlschrank 60 verbunden, um Wärme abzuführen. Die Öffnung 4 ist somit ein Teil der Luftführungsvorrichtung 21 zum Führen von Luft, insbesondere von Außenluft, die vom Bereich außerhalb des Fahrzeugs 100 stammt.

Unterhalb des unteren Aufnahmeraums 1 befindet sich in der gezeigten Ausgestaltung eine Kondensatabführvorrichtung 5, über welche Kondensat des Klimageräts 50 zum Boden des Fahrzeugs 100 geführt wird.

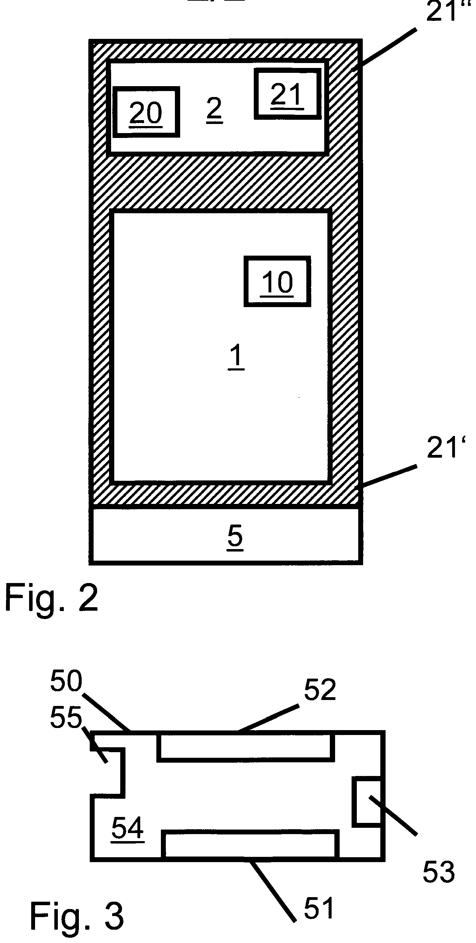

In der Fig. 2 ist ein Schranksystem ohne eingebrachte Komponenten dargestellt. Angedeutet sind die zwei Seitenwände, eine Trennwand oder Ablagefläche zwischen dem oberen Aufnahmeraum 2 und dem unteren Aufnahmeraum 1. Unterhalb des unteren Aufnahmeraums 1 befindet sich die Kondensatabführvorrichtung 5, die in einer alternativen - hier nicht dargestellten - Variante über die Führung der Luft realisiert ist.

Angedeutet sind in dem oberen Aufnahmeraum 2 die elektrische Kontaktierungsvorrichtung 20 sowie die Luftführungsvorrichtung 21, die jeweils so ausgestaltet sind, dass schon durch das Einbringen des Klimageräts in den oberen Aufnahmeraum 2 die elektrische bzw. lufttechnische Kontaktierung vorgenommen wird.

In dem unteren Aufnahmeraum 1 ist eine Stromversorgung 10 angedeutet, welche dem einzubringenden Kühlschrank zur Verfügung steht. Innerhalb des Schranksystems ist dabei die Stromversorgung 10 des unteren Aufnahmeraums 1 mit der elektrischen Kontaktierungsvorrichtung 20 verbunden, sodass auch das Klimagerät hierüber elektrische Energie erhalten kann.

Der Bodenbereich 21' und die obere Abschlussfläche 21" des Schranksystems sind hier durch das Schranksystem selbst gegeben. In einer alternativen Ausgestaltung dient das Fahrzeug als Boden und/oder als oberer Abschluss. Entsprechendes gilt auch für die Rückenwand, die durch das Schranksystem selbst, z. B. durch ein Brett gebildet sein kann oder die durch eine Innenwand des Fahrzeugs gebildet wird.

Ein Klimagerät 50 für das Schranksystem zeigt die Fig. 3.

Das Klimagerät 50 saugt über eine Luftansaugöffnung 51 Luft aus dem zu kühlenden Raum an und bläst über die Luftausblasöffnung 52 kalte Luft in den Raum aus. Die thermische Energie wird dabei auf die Außenluft außerhalb des Raumes übertragen. Die Luftansaugöffnung 51 und die Luftausblasöffnung 52 befinden sich dabei auf der Vorderseite 54 des Klimageräts 50. Auf der Vorderseite 54 befindet sich weiterhin eine Bedienvorrichtung 53. Angedeutet ist eine elektrische Schnittstelle 55, die hier teilweise als Aussparung ausgestaltet werden kann, sodass sich die elektrische Kontaktierung mit der elektrische Kontaktierungsvorrichtung 20 des Schranksystems einfach über dien Einschieben des Klimageräts 50 in den oberen Aufnahmeraum ergibt. Auf der - hier nicht dargestellten - Rückseite des Klimageräts 50 befinden sich passende Anschlüsse, um mit der Luftführungsvorrichtung des Schranksystems verbunden zu werden. Die Anordnung der beiden Öffnungen 51, 52 sowie der Bedienvorrichtung 53 bzw. der elektrischen Schnittstelle 55 ist hier rein beispielhaft und kann je nach den Varianten auch anders realisiert sein.

Alternativ überragt - in einem hier nicht dargestellten Beispiel - das eingebaute Klimagerät 50 das Schranksystem. An wenigstens einer dieser Seiten des vorderen und damit überstehenden Abschnitts befinden sich dann die Luftansaugöffnung 51, die Luftausblasöffnung 52 und/oder die Bedienvorrichtung 53.

## Patentansprüche

1. Schranksystem zum Einbau in einem Fahrzeug (100),
mit einem unteren Aufnahmeraum (1), einem oberen Aufnahmeraum (2) und mindestens einer elektrischen Kontaktierungsvorrichtung (20) zum Bereitstellen von elektrischer Energie und/oder zur Datenkommunikation,
wobei der obere Aufnahmeraum (2) derartig ausgestaltet ist, dass ein Klimagerät (50) reversibel in den oberen Aufnahmeraum (2) einbringbar ist,
wobei der obere Aufnahmeraum (2) derartig ausgestaltet ist, dass das Klimagerät (50) durch ein vollendetes Einbringen in den oberen Aufnahmeraum (2) mechanisch reversibel in dem oberen Aufnahmeraum (2) fixiert ist und reversibel mit der elektrischen Kontaktierungsvorrichtung (20) kontaktiert ist,
**dadurch gekennzeichnet, dass**
eine Kondensatabführvorrichtung (5) vorhanden ist, und
wobei die Kondensatabführvorrichtung (5) mit dem oberen Aufnahmeraum (2) verbunden ist.

2. Schranksystem nach Anspruch 1, wobei zumindest der obere Aufnahmeraum (2) mindestens eine Luftführungsvorrichtung (21) zum Führen von Luft - vorzugsweise Außenluft - aufweist, und
wobei der obere Aufnahmeraum (2) derartig ausgestaltet ist, dass das Klimagerät (50) durch ein vollendetes Einbringen in den oberen Aufnahmeraum (2) reversibel mit der Luftführungsvorrichtung (21) kontaktiert ist.

3. Schranksystem nach Anspruch 2, wobei die Luftführungsvorrichtung (21) zumindest teilweise aus einer Öffnung (4) in einer Rückenwand (3) des Schranksystems besteht.

4. Schranksystem nach Anspruch 2, wobei die Luftführungsvorrichtung (21) zumindest teilweise aus einer Öffnung (4) in einer als Rückenwand (3) des Schranksystems dienenden Wand des Fahrzeugs (100) besteht.

5. Schranksystem nach einem der Ansprüche 2 bis 4, wobei die Luftführungsvorrichtung (21) eine Verbindung in einem einen Bereich der Bodenfläche (21') des Schranksystems bildenden Teils des Fahrzeugs (100) und/oder in einem einen Bereich einer oberen Abschlussfläche (21") des Schranksystems bildenden Teils des Fahrzeugs (100) aufweist.

6. Schranksystem nach einem der Ansprüche 1 bis 5, wobei eine elektrische Verbindung zwischen einer in den unteren Aufnahmeraum (1) mündenden Stromversorgung (10) und der elektrischen Kontaktierungsvorrichtung (20) besteht.

7. Schranksystem nach einem der Ansprüche 1 bis 6, wobei die elektrische Kontaktierungsvorrichtung (20) mit einer elektrischen Schnittstelle (55) des Klimageräts (50) durch eine Schieb- oder Steckverbindung elektrisch kontaktierbar ist.

## Claims

1. A cabinet system for installation in a vehicle (100),
comprising a lower receiving space (1), an upper receiving space (2) and at least one electrical contacting device (20) for providing electrical power and/or for data communication,
wherein the upper receiving space (2) is configured such that an air conditioner (50) can be reversibly inserted into the upper receiving space (2),
wherein the upper receiving space (2) is configured such that the air conditioner (50) is mechanically reversibly fixed in the upper receiving space (2) by a completed insertion into the upper receiving space (2) and is reversibly contacted with the electrical contacting device (20),
**characterized in that** a condensate removal device (5) is provided, and
wherein the condensate removal device (5) is connected to the upper receiving space (2).

2. The cabinet system according to claim 1, wherein at least the upper receiving space (2) comprises at least one air guiding device (21) for guiding air - preferably outside air -, and
wherein the upper receiving space (2) is configured such that the air conditioner (50) is reversibly contacted with the air guiding device (21) by a completed insertion into the upper receiving space (2).

3. The cabinet system according to claim 2, wherein the air guiding device (21) consists at least partially of an opening (4) in a rear wall (3) of the cabinet system.

4. The cabinet system according to claim 2, wherein the air guiding device (21) consists at least partially of an opening (4) in a wall of the vehicle (100) serving as a rear wall (3) of the cabinet system.

5. The cabinet system according to any of claims 2 to 4, wherein the air guiding device (21) includes a connection in a part of the vehicle (100) forming a region of the bottom surface (21') of the cabinet system and/or in a part of the vehicle (100) forming a region of an upper end surface (21") of the cabinet system.

6. The cabinet system according to any of claims 1 to 5, wherein an electrical connection is provided between a power supply (10) opening into the lower receiving space (1) and the electrical contacting device (20).

7. The cabinet system according to any of claims 1 to 6, wherein the electrical contacting device (20) is adapted to be electrically contacted with an electrical interface (55) of the air conditioner (50) by a sliding or plug-in connection.

## Revendications

1. Système d'armoire pour le montage dans un véhicule (100),
comprenant un espace de réception inférieur (1), un espace de réception supérieur (2) et au moins un dispositif d'établissement de contact électrique (20) pour le fournissement d'énergie électrique et/ou pour la communication de données,
l'espace de réception supérieur (2) étant réalisé de telle sorte qu'un appareil de climatisation (50) est apte à être inséré de manière réversible dans l'espace de réception supérieur (2),
l'espace de réception supérieur (2) étant réalisé de telle sorte que l'appareil de climatisation (50), par une insertion complète dans l'espace de réception supérieur (2), est mécaniquement fixé de manière réversible dans l'espace de réception supérieur (2) et est en contact réversible avec le dispositif d'établissement de contact électrique (20),
**caractérisé en ce qu'**un dispositif d'évacuation de condensat (5) est prévu, et
le dispositif d'évacuation de condensats (5) étant relié à l'espace de réception supérieur (2).

2. Système d'armoire selon la revendication 1, au moins l'espace de réception supérieur (2) présentant au moins un dispositif de guidage d'air (21) pour guider de l'air - de préférence de l'air extérieur, et
l'espace de réception supérieur (2) étant réalisé de telle sorte que l'appareil de climatisation (50), par une insertion complète dans l'espace de réception supérieur (2), est en contact réversible avec le dispositif de guidage d'air (21).

3. Système d'armoire selon la revendication 2, le dispositif de guidage d'air (21) étant constitué au moins en partie d'une ouverture (4) dans une paroi arrière (3) du système d'armoire.

4. Système d'armoire selon la revendication 2, le dispositif de guidage d'air (21) étant constitué au moins en partie d'une ouverture (4) dans une paroi du véhicule (100) servant de paroi arrière (3) du système d'armoire.

5. Système d'armoire selon l'une des revendications 2 à 4, le dispositif de guidage d'air (21) présentant une liaison dans une partie du véhicule (100) formant une zone de la surface de fond (21') du système d'armoire et/ou dans une partie du véhicule (100) formant une zone d'une surface de fermeture supérieure (21") du système d'armoire.

6. Système d'armoire selon l'une des revendications 1 à 5, une liaison électrique étant présente entre une alimentation électrique (10) débouchant dans l'espace de réception inférieur (1) et le dispositif d'établissement de contact électrique (20).

7. Système d'armoire selon l'une des revendications 1 à 6, le dispositif d'établissement de contact électrique (20) étant apte à être mis en contact électrique avec une interface électrique (55) de l'appareil de climatisation (50) par une liaison par coulissement ou par enfichage.
